# EUROPÄISCHE PATENTANMELDUNG

(11) **EP 2 719 514 A1**
(43) Veröffentlichungstag der Anmeldung: **16.04.2014**
(21) Anmeldenummer: 13175989.6
(22) Anmeldetag: 10.07.2013
(51) Int. Cl.: B29C 45/16, B29C 45/56, B29C 45/73

(54) **Verfahren und Vorrichtung zur Herstellung eines Kunststoffformteils**

(30) Priorität: 12.10.2012 EP 12188390
(71) Anmelder: NKS M. Baukloh, 58540 Meinerzhagen (DE)
(72) Erfinder: Baukloh, Horst, 58540 Meinerzhagen (DE)
(74) Vertreter: Dörner, Kötter & Kollegen

(57) **Zusammenfassung**

Die Erfindung betrifft ein Verfahren zur Herstellung eines Kunststoffformteils (31), wobei zunächst die Oberflächen der die Kavität (13) eines Spritzgießwerkzeugs (1) ausbildenden Werkzeugplatten (11, 12) von außen erhitzt werden, nachfolgend das Spritzgießwerkzeug (1) geschlossen und eine Kunststoffmasse (3) unter Zugabe eines Treibmittels in die Kavität (13) des Spritzgießwerkzeugs (1) eingebracht wird, anschließend das Spritzgießwerkzeug (1) zur Erzielung eines Prägespaltes (18) partiell geöffnet wird, in den Prägespalt (18) eine definierte Menge an Lack eingebracht wird und nachfolgend das Spritzgießwerkzeug (1) geschlossen wird, derart, dass eine gleichmäßige Verteilung des Lackes auf der Oberfläche des durch die Kunststoffmasse (3) ausgebildeten Kunststoffformteils (31) bewirkt wird.

## Beschreibung

Die Erfindung betrifft ein Verfahren zur Herstellung eines Kunststoffformteils nach dem Patentanspruch 1. Die Erfindung betrifft weiterhin eine Vorrichtung zur Durchführung eines solchen Verfahrens nach Patentanspruch 9.

Insbesondere im Bereich der Automobilindustrie ist es ein ständiges Bestreben, Bauteile bei zumindest gleich bleibender Qualität in ihrem Gewicht zu reduzieren. Dies betrifft auch Kunststoffformteile, die in Kraftfahrzeugen einen erheblichen Anteil haben. Zur gewichtsreduzierenden Realisierung von Kunststoffformteilen ist es bekannt, während des Spritzgießprozesses definierte Mikrogaseinschlüsse zu injizieren. Hierbei wir direkt in die Kunststoffschmelze ein Treibgas eingebracht. Durch den Einsatz des Treibgases in den überkritischen Zustand der Schmelze wird eine gute, reproduzierbare Dosierung des Treibgases verbunden mit einer kurzen Mischungsdauer des Treibmittels in der Schmelze erzielt.

Nachteilig an dem vorbekannten Verfahren zur Herstellung gewichtsreduzierter Kunststoffformteile ist, dass die Kunststoffformteile durch das Gastreibmittel eine unruhige, undefinierte Oberfläche aufweisen. Dabei hat sich herausgestellt, dass ein steigender Anteil an Treibmittel sowohl eine gesteigerte Gewichtsreduzierung, als auch eine erhöhte Beeinträchtigung der Formteiloberfläche mit sich bringt. In vielen Anwendungsbereichen, beispielsweise bei Auskleidungsteilen der Inneneinrichtung in Kraftfahrzeugen ist eine lackierte Oberfläche gewünscht, an die hohe Ansprüche hinsichtlich ihrer Oberfläche gestellt werden. Die Herstellung solcher hochwertiger lackierter Oberflächen bei mit Treibmitteln geschäumten Kunststoffspritzformteilen erweist sich derzeit als sehr problematisch.

Hier will die Erfindung Abhilfe schaffen. Der Erfindung liegt die Aufgabe zugrunde, ein Verfahren zur aufwandminimierten Herstellung eines lackierten, gewichtsreduzierten Kunststoffformteils, das den hohen Anforderungen an die Oberflächenbeschaffenheit erfüllt, bereitzustellen. Gemäß der Erfindung wird diese Aufgabe durch ein Verfahren mit den Merkmalen des Patentanspruchs 1 gelöst.

Mit der Erfindung ist ein Verfahren zur aufwandminimierten Herstellung eines lackierten, gewichtsreduzierten Kunststoffformteils mit herausragender Oberflächenbeschaffenheit bereitgestellt. Durch die äußere Erhitzung der Oberflächen der Kavität der Werkzeugplatten vor dem Einspritzen der Kunststoffmasse, ist eine hohe Oberflächengüte des Kunststoffformteils erzielt. Durch das nachfolgende Einbringen einer definierten Menge an Lack in einen zuvor gebildeten Prägespalt, der durch anschließendes schließen des Werkzeugs gleichmäßig verteilt wird, ist eine lackierte Formteiloberfläche mit hoher Oberflächengüte erzielt. Unter dem Begriff "Lack" sind nachfolgend jedwede zur Beschichtung von Kunststoffen geeignete Lacke und Farben zu subsummieren.

In Weiterbildung der Erfindung wird vor dem Einspritzen der Kunststoffmasse in dem Spritzgießwerkzeug ein definierter Gasinnendruck aufgebaut, gegen den die Kunststoffmasse eingespritzt wird. Während des Einspritzens wird das Gas durch die Kunststoffschmelze aus dem Werkzeug verdrängt, wobei der Gasgegendruck geregelt wird. Durch den Gasgegendruck wird der üblicherweise auftretende starke Druckabfall während des Einspritzens und damit ein ungewolltes Aufschäumen der gasbeladenen Kunststoffschmelze entgegengewirkt. Hierdurch ist die erzielte Oberflächenqualität weiter verbessert.

In weiterer Ausgestaltung der Erfindung erfolgt die Erhitzung der Oberflächen der die Kavität des Spritzgießwerkzeuges abbildenden Werkzeugplatten mittels eines Infrarotstrahlers, der temporär zwischen die beiden Werkzeugplatten des geöffneten Spritzgießwerkzeugs positioniert wird. Hierdurch ist eine effiziente Oberflächenerhitzung der Werkzeugplatte ermöglicht. Der Infrarotstrahler kann schnell und unkompliziert nach dem Aufheizvorgang zwischen den Werkzeugplatten entfernt werden. Alternativ kann zur Erhitzung der Oberflächen der Werkzeugplatten auch ein externer Induktor zum Einsatz kommen. Die Spule des Induktors befindet sich dabei vor beziehungsweise oberhalb der Kavität, wodurch nur oberflächennahe Bereiche der Werkzeugtrennebene erwärmt werden. Dabei kann es sich bei dem eingesetzten Induktor um einen ein- oder mehrwindigen Flächeninduktor handeln. Vorzugsweise kommt ein zweiseitig wirkender Flächeninduktor zum Einsatz. Hierdurch ist eine gleichzeitige Erwärmung der Oberflächen der beiden gegenüberliegend angeordneten Werkzeugplatten ermöglicht.

In weiterer Ausgestaltung der Erfindung wird der Lack durch das Kunststoffformteil hindurch in den Prägespalt geleitet. Hierdurch ist eine zentrale Lackeinbringung ermöglicht, wodurch eine gleichmäßige Lackverteilung beim Schließen des Prägespaltes erzielt ist.

In Weiterbildung der Erfindung wird die Lackzufuhr mit der Öffnungsbewegung des Spritzgießwerkzeugs zur Erzielung eines Prägespaltes gekoppelt. Hierdurch ist eine genaue Dosierung der einzubringenden Lackmenge ermöglicht.

In Weiterbildung der Erfindung wird in einer Werkzeugplatte ein Kanal zur Durchleitung von Lack eingebracht, dessen Durchmesser derart bemessen ist, dass durch das durch die Öffnungsbewegung des Spritzgießwerkzeugs erzeugte Vakuum die Lackmenge in den Prägespalt eingebracht wird. Hierdurch ist eine einfache, reproduzierbare und gleichsam genaue Dosierung der Lackmenge erzielt.

Vorteilhaft wird das lackierte Kunststoffformteil aus dem Spritzgießwerkzeug entnommen und nachfolgend mit UV-Licht bestrahlt. Hierdurch ist eine Nachvernetzung der Lackschicht bewirkt, wodurch die Oberflächenbeschaffenheit weiter verbessert wird.

Der Erfindung liegt weiterhin die Aufgabe zugrunde, eine Vorrichtung zur aufwandminimierten Herstellung eines lackierten, gewichtsreduzierten Kunststoffformteils, das den hohen Anforderungen an die Oberflächenbeschaffenheit erfüllt, bereitzustellen. Gemäß der Erfindung wird diese Aufgabe durch eine Vorrichtung mit den Merkmalen des Patentanspruchs 9 gelöst.

Mit der Erfindung ist eine Vorrichtung zur aufwandminimierten Herstellung eines lackierten, gewichtsreduzierten Kunststoffformteils mit herausragender Oberflächenbeschaffenheit bereitgestellt. Durch die Anordnung eines Kanals in einer Werkzeugplatte zur Durchführung von Lack durch ein in der Kavität befindliches Formteil hindurch in einen hinter dem Formteil befindlichen, durch partielles Öffnen der Werkzeugplatten des Spritzgießwerkzeuges erzeugten Prägespalt, der mit einem Lackreservoir verbunden ist, ist eine gleichmäßige Lackschicht auf dem durch physikalisches Ausschäumen in der Kavität gebildeten Kunststoffformteils erzielt. Die Werkzeugplatten sind dabei derart in dem Spritzgießwerkzeug angeordnet, dass die Kavität auch im nicht vollständig geschlossenen Zustand mit einem Prägespalt umlaufend abgedichtet ist. Eine derartige Anordnung der Werkzeugplatten ist dem Fachmann aus dem Bereich des Spritzprägens bekannt.

In Weiterbildung der Erfindung mündet der Kanal in einer Einspritzdüse, die nach dem physikalischen Ausschäumen der Kavität durch das geschäumte Formteil geführt ist. Hierdurch ist ein gezieltes Einbringen des Lacks in den Prägespalt ermöglicht.

In Ausgestaltung der Erfindung ist der Kanal mit einer Pumpe verbunden. Hierdurch ist ein Einbringen des Lacks in den Prägespalt mittels Überdruck ermöglicht.

In alternativer Ausgestaltung der Erfindung ist der Durchmesser des Kanals derart dimensioniert, dass durch das durch die Öffnungsbewegung der Werkzeugplatten des Spritzgießwerkzeugs erzeugte Vakuum eine definierte Lackmenge aus dem Lackreservoir in den Prägespalt eingebracht wird. Hierdurch ist eine einfache und zugleich zuverlässige Dosierung der erforderlichen Lackmenge ohne das Erfordernis einer zusätzlichen Pumpe ermöglicht. Gleichwohl kann zur Unterstützung der Lackeinspritzung das Lackreservoir mit einem Überdruck beaufschlagt sein.

In Weiterbildung der Erfindung ist ein Heizmodul zur externen Erhitzung der Oberfläche der Werkzeugplatten angeordnet, das temporär zwischen die Werkzeugplatten des geöffneten Spritzgießwerkzeuges positionierbar ist. Hierdurch ist eine Oberflächenerhitzung der Kavitäten vor dem Schließen des Spritzgießwerkzeugs und Einbringen des Thermoplastes ermöglicht, wodurch die Oberfläche des geschäumten Kunststoffformteils verbessert ist. Bevorzugt weist das Heizmodul eine induktive oder auch eine Infrarot-Beheizungseinheit auf.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:

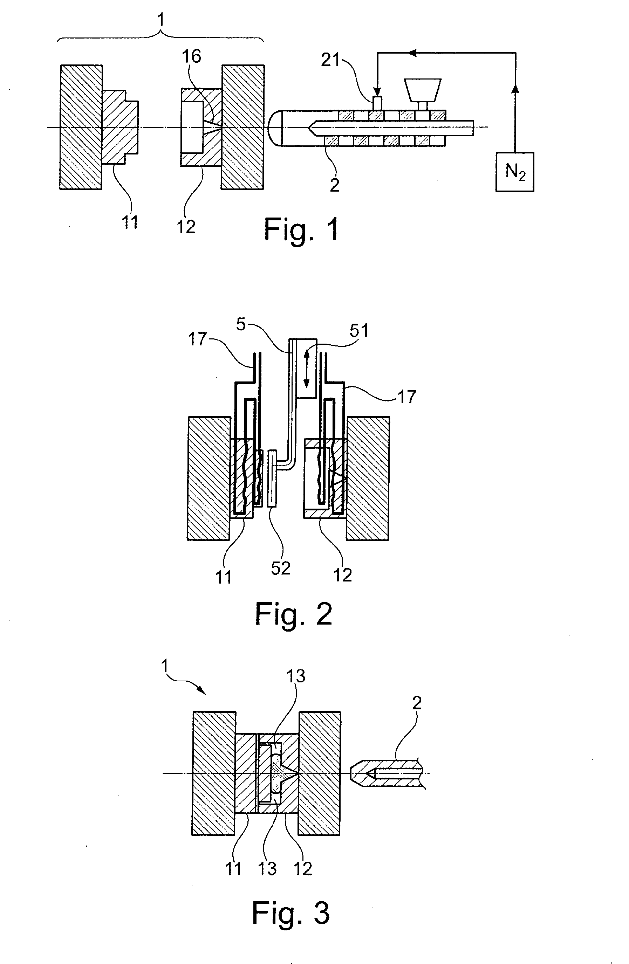

- Figur 1: die schematische Darstellung einer Vorrichtung zur Herstellung eines Kunststoffformteils;
- Figur 2: die schematische Darstellung der Werkzeugplatten der Vorrichtung aus Figur 1 mit eingeführten externen Induktor;
- Figur 3: die schematische Darstellung der Werkzeugplatten des geschlossenen Spritzgießwerkzeugs mit eingeschäumtem Thermoplastkunststoff;
- Figur 4: die schematische Darstellung des Temperaturverlaufs der Werkzeugplattenoberflächen während der Herstellung eines Kunststoffformteils;
- Figur 5: die schematische Darstellung eines integrierten Lackierprozesses:
a) Werkzeugplatte mit offenem Prägespalt
b) Werkzeugplatte mit geschlossenen Prägespalt und
- Figur 6: die schematische Darstellung einer Anordnung zur volumetrischen Lackzuführung:
a) in Ansaugstellung
b) in Einspritzstellung.

Die als Ausführungsbeispiel gewählte Vorrichtung zur Herstellung eines Kunststoffformteils umfasst eine - in den Figuren lediglich in Form von wesentlichen Bestandteilen skizzierte - Spritzgießmaschine, mit einem Spritzgießwerkzeug 1, das mit zwei gegenüberliegend angeordneten Werkzeugplatten 11, 12 versehen ist und das mit einer Plastifiziereinheit 2 verbunden ist, die mit einem Treibgasinjektor 21 versehen ist. Die Werkzeugplatten 11, 12 sind in bekannter Art und Weise mit Heiz-/Kühlkanälen 17 versehen und bilden eine Kavität 13 aus, welche die Form des herzustellenden Kunststoffformteils abbildet. In der der Plastifiziereinheit abgewandten Werkzeugplatte 11 ist etwa mittig ein Lackierkanal 14 eingebracht, der in eine Düse 15 übergeht. Der Lackierkanal ist zweckmäßig mit einem - nicht dargestellten - Ventil versehen. Die Düse 15 ragt derart aus der Werkzeugplatte 11 heraus, dass sie nach Einbringen der mit Treibgas durchmischten Kunststoffmasse 3 durch den Einspritzkanal 16 durch das hierdurch ausgebildete Kunststoffformteil 31 hindurchragt. Damit der Lack an den Werkzeugplatten nicht anhaftet, sind diese mit einer Antihaftbeschichtung versehen. Geeignete Antihaftbeschichtungen für die einzusetzenden Lacke sind dem Fachmann bekannt.

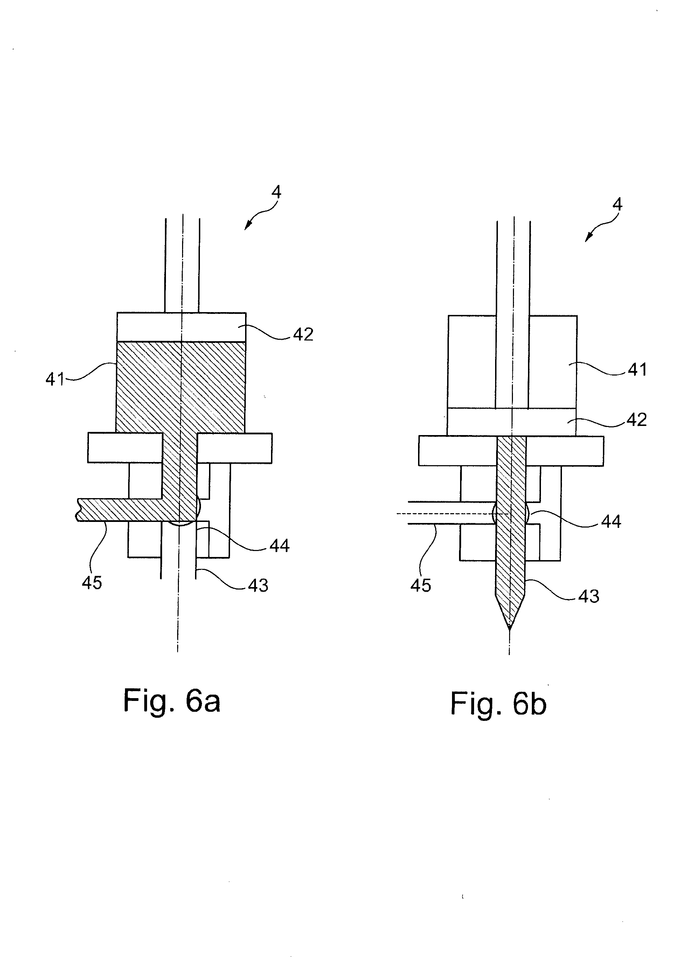

Der Lackierkanal 14 ist im Ausführungsbeispiel mit einer Dosiereinrichtung 4 verbunden, die in Figur 6 schematisch dargestellt ist. Die Dosiereinrichtung 4 umfasst einen Zylinder 41, in dem ein Kolben 42 verschiebbar geführt ist. Der Zylinder 41 mündet in eine Zuleitung 43, die mit dem Lakierkanal 14 des Werkzeugs 1 verbunden ist und in die über ein Zwei-Wege-Ventil 44 eine Anschlussleitung 45 mündet, welche mit einem - nicht dargestellten - Lackreservoir verbunden ist.

Weiterhin ist ein Heizmodul 5 angeordnet, das über eine Zuführeinrichtung 51 zwischen die Werkzeugplatten 11, 12 des Spritzgießwerkzeugs 1 bewegbar ist und an dessen Ende ein Induktor 52 angeordnet ist. Im Ausführungsbeispiel ist der Induktor als zweiseitig wirkender Flächeninduktor ausgebildet.

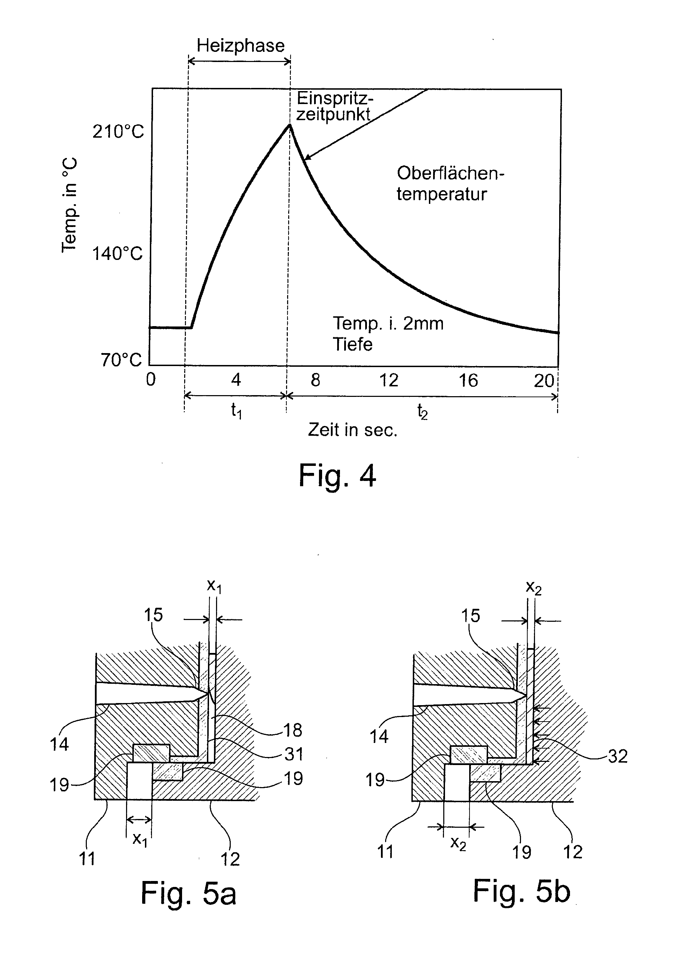

Zur Herstellung eines Kunststoffformteils 31 werden zunächst die Werkzeugplatten 11, 12 über die Heiz-/Kühlkanäle 17 nach dem Variothermverfahren erhitzt und das Heizmodul 5 wird zwischen die Werkzeugplatten 11, 12 bewegt, wodurch die Oberflächen der die Kavität 13 ausbildenden Werkzeugplatten 11, 12 von außen erhitzt werden. Bei Erreichen einer Oberflächentemperatur von ca. 215°C wird das Heizmodul 5 zwischen den Werkzeugplatten 11, 12 entfernt und das Spritzgießwerkzeug 1 wird geschlossen. Anschließend wird über die Plastifiziereinheit 2 mit angeordnetem Treibgasinjektor 21 eine treibgasversetzte Kunststoffmasse 3 in die von den Werkzeugplatten 11, 12 gebildete Kavität 13 eingespritzt. Durch die hohe Oberflächentemperatur der Werkzeugplatte 11, 12 erhält das in der Kavität 13 ausgebildete Kunststoffformteil 31 eine lackierfähige Oberfläche. In Figur 4 ist der Temperaturverlauf der Oberflächen der Werkzeugplatten 11, 12 in 2 mm Tiefe aufgetragen. In der Zeitspanne t₁ erfolgt bei geöffnetem Werkzeug das Aufheizen der Werkzeugplatten 11, 12 durch das Heizmodul 5. In der Zeitspanne t₂ ist das Werkzeug geschlossen. Die mit Treibgas versetzte Kunststoffmasse 3 wird in das Werkzeug 1 eingespritzt. Im Ausführungsbeispiel kommt ein mit Stickstoff versetzter Thermoplast zum Einsatz.

Im Anschluss an den Spritzvorgang werden die Werkzeugplatten 11, 12 um eine Strecke X₁ auseinandergefahren, wodurch ein Prägespalt 18 gebildet ist. Zur Abdichtung des Prägespalts 18 weisen die Werkzeugplatten 11, 12 gegenüberliegend angeordnete Dichtungen 19 auf, wie in Figur 5 dargestellt. Durch die Relativbewegung der Werkzeugplatten 11, 12 zur Ausbildung des Prägespalts 18 wird ein Vakuum erzeugt, durch das ein Lack mit geringer Viskosität durch den Lackierkanal 14 über die Düse 15 in den Prägespalt 18 gesaugt wird. Dazu durchdringt die Düse 15 das in dem Spritzgießwerkzeug 1 befindliche Kunststoffformteil 31. Der Lackierkanal 14 ist im Ausführungsbeispiel mit einem - nicht dargestellten - mit Überdruck beaufschlagten Lackreservoir verbunden. Nachfolgend werden die Werkzeugplatten 11, 12 wieder aufeinander zugefahren, wodurch der Prägespalt 18 geschlossen wird. Die Werkzeugplatten 11, 12 weisen danach noch einen Abstand von x₁ auf, was der Dicke der durch das Schließen des Prägespalts 18 auf dem Kunststoffformteil 31 gleichmäßig aufgebrachten Lackschicht 32 entspricht. Nachfolgend wird das Kunststoffspritzgießwerkzeug 1 geöffnet und das lackierte Kunststoffformteil 31 wird entnommen und zur Nachvernetzung der Lackschicht mit UV-Licht bestrahlt.

Ergänzend ist der Lackierkanal 14 im Ausführungsbeispiel mit einer volumetrischen Dosiereinrichtung 4 verbunden. Dabei ist das Spritzgießwerkzeug 1 derart mit dem Kolben 42 der Dosiereinrichtung 4 verbunden, dass der Kolben 42 bei der Öffnung des Spritzgießwerkzeugs 1 zur Bildung des Prägespaltes 18 innerhalb des Zylinders 41 bewegt wird, wodurch eine in dem Zylinder 41 befindliche Lackmenge über die Zuleitung 43 in den Lackierkanal 14 eingebracht wird. Zum Auffüllen des Zylinders 41 mit Lack wird das Zwei-Wege-Ventil 40 derart eingestellt, dass Zuleitung 43 verschlossen und die mit dem - nicht dargestellten - Lackreservoir verbundene Anschlussleitung 45 mit dem Zylinder 41 verbunden ist. Durch Bewegung des Kolbens 42 innerhalb des Zylinders 41 wird nun der Zylinder 41 mit Lack befüllt.

In einer weiteren Ausgestaltung kann die Lackzufuhr auch über den Einspritzkanal 16 oder versetzt zu diesem vorgesehenen Kanal erfolgen. In diesem Fall findet keine Durchdringung des Kunststoffformteils durch die mit dem Lackierkanal 14 verbundenen Düse 15 statt.

## Patentansprüche

1. Verfahren zur Herstellung eines Kunststoffformteils (31), wobei zunächst die Oberflächen der die Kavität (13) eines Spritzgießwerkzeugs (1) ausbildenden Werkzeugplatten (11, 12) von außen erhitzt werden, nachfolgend das Spritzgießwerkzeug (1) geschlossen und eine Kunststoffmasse (3) unter Zugabe eines Treibmittels in die Kavität (13) des Spritzgießwerkzeugs (1) eingebracht wird, anschließend das Spritzgießwerkzeug (1) zur Erzielung eines Prägespaltes (18) partiell geöffnet wird, in den Prägespalt (18) eine definierte Menge an Lack eingebracht wird und nachfolgend das Spritzgießwerkzeug (1) geschlossen wird, derart, dass eine gleichmäßige Verteilung des Lackes auf der Oberfläche des durch die Kunststoffmasse (3) ausgebildeten Kunststoffformteils (31) bewirkt wird.

2. Verfahren nach Anspruch 1, **dadurch gekennzeichnet, dass** vor dem Einspritzen der Kunststoffmasse (3) in dem Spritzgießwerkzeug (1) ein definierter Gasinnendruck aufgebaut wird, gegen den die Kunststoffmasse (3) eingespritzt wird.

3. Verfahren nach Anspruch 1 oder 2, **dadurch gekennzeichnet, dass** die Erhitzung der Oberflächen der die Kavität (13) des Spritzgießwerkzeugs (1) abbildenden Werkzeugplatten (11, 12) mittels eines Infrarotstrahlers oder eines externen Induktors erfolgt, der temporär zwischen die beiden Werkzeugplatten (11, 12) des geöffneten Spritzgießwerkzeugs (1) positioniert wird.

4. Verfahren nach einem der Ansprüche 1 bis 3, **dadurch gekennzeichnet, dass** als Treibmittel Stickstoff oder Kohlendioxid eingesetzt werden.

5. Verfahren nach einem der vorgenannten Ansprüche, **dadurch gekennzeichnet, dass** der Lack durch das Kunststoffformteil (31) hindurch in den Prägespalt (18) geleitet wird.

6. Verfahren nach einem der vorgenannten Ansprüche, **dadurch gekennzeichnet, dass** die Lackzufuhr mit der Öffnungsbewegung des Spritzgießwerkzeugs (1) zur Erzielung eines Prägespaltes (18) gekoppelt wird.

7. Verfahren nach Anspruch 5 oder 6, **dadurch gekennzeichnet, dass** in einer Werkzeugplatte (11) ein Kanal (14) zur Durchleitung von Lack eingebracht wird, dessen Durchmesser derart bemessen ist, dass durch das durch die Öffnungsbewegung der Werkzeugplatten (11, 12) des Spritzgießwerkzeugs (1) erzeugte Vakuum eine definierte Lackmenge in den Prägespalt (18) eingebracht wird.

8. Verfahren nach einem der vorgenannten Ansprüche, **dadurch gekennzeichnet, dass** das lackierte Kunststoffformteil (31) aus dem Spritzgießwerkzeug entnommen wird und nachfolgend mit UV-Licht bestrahlt wird.

9. Vorrichtung zur Durchführung eines Verfahrens nach einem der vorgenannten Ansprüche, umfassend ein Spritzgießwerkzeug (1) mit zwei eine Kavität (13) abbildenden Werkzeugplatten (11, 12) und ein Spritzaggregat zum physikalischen Ausschäumen der Kavität (13), wobei in einer Werkzeugplatte (11, 12) ein Kanal (14) zur Durchführung von Lack durch ein in der Kavität (13) befindliches Kunststoffformteil (31) hindurch in einen hinter dem Kunststoffformteil (31) befindlichen, durch partielles Öffnen der Werkzeugplatten (11, 12) des Spritzgießwerkzeuges (1) erzielten Prägespalt (18) angeordnet ist, der mit einem Lackreservoir verbunden ist.

10. Vorrichtung nach Anspruch 9, **dadurch gekennzeichnet, dass** der Kanal (14) in eine Einspritzdüse (15) mündet, die nach dem physikalischen Ausschäumen der Kavität durch das geschäumte Kunststoffformteil (31) geführt ist.

11. Vorrichtung nach Anspruch 9 oder 10, **dadurch gekennzeichnet, dass** der Kanal (14) mit einer Pumpe verbunden ist.

12. Vorrichtung nach einem der Ansprüche 9 bis 11, **dadurch gekennzeichnet, dass** der Durchmesser des Kanals (14) derart dimensioniert ist, dass durch das durch die Öffnungsbewegung der Werkzeugplatten (11, 12) des Spritzgießwerkzeugs (1) erzeugte Vakuum eine definierte Lackmenge in den Prägespalt (18) eingebracht wird.

13. Vorrichtung nach einem der Ansprüche 9 bis 12, **dadurch gekennzeichnet, dass** ein Heizmodul (5) zur externen Erhitzung der Oberflächen der Werkzeugplatten (11, 12) angeordnet ist, das temporär zwischen den Werkzeugplatten (11, 12) des geöffneten Spritzgießwerkzeuges (1) positionierbar ist.

14. Vorrichtung nach Anspruch 13, **dadurch gekennzeichnet, dass** das Heizmodul (5) eine induktive Beheizungseinheit aufweist.

15. Vorrichtung nach Anspruch 13, **dadurch gekennzeichnet, dass** das Heizmodul (5) eine Infrarot-Beheizungseinheit aufweist.
